# FASCICULE DE BREVET EUROPEEN

(11) **EP 3 548 706 B1**
(45) Date de publication et mention de la délivrance du brevet: **30.12.2020**
(21) Numéro de dépôt: 17811663.8
(22) Date de dépôt: 28.11.2017
(51) Int. Cl.: F01D 9/06, F02K 3/115, F02C 7/14, F02C 7/18

(54) **AUBE DIRECTRICE DE SORTIE POUR TURBOMACHINE D'AERONEF, COMPRENANT UNE ZONE COUDEE DE PASSAGE DE LUBRIFIANT PRESENTANT UNE CONCEPTION AMELIOREE**
AUSTRITTSLEITSCHAUFEL EINER TURBOMASCHINE EINES FLUGZEUGS MIT EINEM GEBOGENEN SCHMIERKANAL MIT VERBESSERTEM DESIGN
AIRCRAFT TURBOMACHINE EXIT GUIDE VANE COMPRISING A BENT LUBRICANT PASSAGE OF IMPROVED DESIGN

(30) Priorité: 29.11.2016 FR 1661643
(43) Date de publication de la demande: 09.10.2019
(73) Titulaire: Safran Aircraft Engines, 75015 Paris (FR)
(72) Inventeur: ZACCARDI, Cédric, 77550 Moissy-Cramayel (FR); PERDRIGEON, Christophe, Marcel, Lucien, 77550 Moissy-Cramayel (FR); BOUTALEB, Mohamed-Lamine, 77550 Moissy-Cramayel (FR); DREANO, Sébastien, Vincent, François, 77550 Moissy-Cramayel (FR)
(74) Mandataire: Brevalex
(86) Numéro de dépôt international: PCT/FR2017/053265
(87) Numéro de publication internationale: WO 2018/100278

(56) Documents cités:
- WO-A1-2016/156743
- GB-A- 1 358 076
- US-A1- 2006 042 223

## Description

### DOMAINE TECHNIQUE

La présente invention se rapporte au domaine des turbomachines d'aéronef à double flux, et en particulier à la conception des aubes directrices agencées dans tout ou partie d'un flux d'air d'une soufflante de la turbomachine.

Il s'agit de préférence d'aubes directrices de sortie, également dénommées OGV (de l'anglais « Outlet Guide Vane »), prévues pour redresser le flux d'air en sortie de la soufflante. Alternativement ou simultanément, des aubes directrices pourraient le cas échéant être placées à l'entrée de la soufflante. Les aubes directrices sont classiquement agencées dans la veine secondaire de la turbomachine.

L'invention concerne de préférence un turboréacteur d'aéronef équipé de telles aubes directrices de sortie.

### ETAT DE LA TECHNIQUE ANTERIEURE

Sur certaines turbomachines à double flux, il est connu d'implanter des aubes directrices de sortie en aval de la soufflante pour redresser le flux qui s'échappe de celle-ci, et aussi éventuellement pour remplir une fonction structurale. Cette dernière fonction vise en effet à permettre le passage des efforts du centre de la turbomachine, vers une virole extérieure située dans le prolongement du carter de soufflante. Dans ce cas de figure, une attache moteur est classiquement agencée sur ou à proximité de cette virole extérieure, pour assurer la fixation entre la turbomachine et un mât d'accrochage de l'aéronef.

Récemment, il a également été proposé d'affecter une fonction additionnelle aux aubes directrices de sortie. Il s'agit d'une fonction d'échangeur thermique entre l'air extérieur traversant la couronne d'aubes directrices de sortie, et du lubrifiant circulant à l'intérieur de ces aubes. Cette fonction d'échangeur thermique est par exemple connue du document US 8 616 834, ou encore du document FR 2 989 110. Les documents GB 1 358 076 A, WO 2016/156743 A1 et US 2006/042223 A1 présentent également des réalisations de l'art antérieur.

Le lubrifiant destiné à être refroidi par les aubes directrices de sortie peut provenir de différentes zones de la turbomachine. Il peut en effet s'agir d'un lubrifiant circulant à travers des enceintes de lubrification des paliers de roulement supportant les arbres moteur et/ou le moyeu de soufflante, ou encore d'un lubrifiant dédié à la lubrification des éléments de transmission mécanique de la boîte d'accessoires, de l'anglais AGB (« *Accessory Geared Box* »). Enfin, il peut aussi servir à la lubrification d'un réducteur d'entraînement de la soufflante, lorsqu'un tel réducteur est prévu sur la turbomachine afin de diminuer la vitesse de rotation de sa soufflante.

Les besoins croissants en lubrifiant nécessitent d'adapter en conséquence la capacité de dissipation de chaleur, associée aux échangeurs destinés au refroidissement du lubrifiant. Le fait d'attribuer un rôle d'échangeur thermique aux aubes directrices de sortie, comme dans les solutions des deux documents cités ci-dessus, permet en particulier de diminuer, voire de supprimer les échangeurs conventionnels du type ACOC (de l'anglais « *Air Cooled Oil Cooler* »)*.* Ces échangeurs ACOC étant généralement agencés dans la veine secondaire, leur diminution / suppression permet de limiter les perturbations du flux secondaire, et d'augmenter ainsi le rendement global de la turbomachine.

La fonction d'échangeur thermique est obtenue sur l'aube en prévoyant un ou plusieurs passages intérieurs au sein de cette aube, et en implantant des moyens de transfert thermique au sein de ces passages délimités par la paroi d'intrados et la paroi d'extrados. Lorsque deux passages sont prévus respectivement pour le trajet aller du lubrifiant dans l'aube, et pour son trajet retour, une zone coudée relie ces deux passages. La zone coudée est généralement laissée libre pour limiter les pertes de charges que pourrait occasionner la présence de moyens de transfert thermique du type de ceux implantés dans les passages intérieurs reliés par cette zone coudée.

Cependant, cette zone coudée est susceptible d'être le siège d'un phénomène de recirculation du lubrifiant en sortie du passage intérieur, en raison de la rupture brute de section entre cette zone évidée élargie, et l'extrémité du passage intérieur structurée par la présence des moyens de transfert thermique. Le lubrifiant subit en effet une perte de vitesse dans certaines parties de la zone coudée, ce qui provoque des recirculations de lubrifiant perturbant son écoulement.

En outre, l'absence de moyens de transfert thermique dans la zone coudée diminue sensiblement la capacité globale d'échange thermique de l'aube, et réduit la résistance mécanique de cette zone pourtant soumise à de fortes pressions de lubrifiant (par exemple une dizaine de bars).

### EXPOSÉ DE L'INVENTION

Pour répondre au moins partiellement à ces problèmes, l'invention a tout d'abord pour objet une aube directrice destinée à être agencée dans tout ou partie d'un flux d'air d'une soufflante de turbomachine d'aéronef à double flux, l'aube directrice comprenant un pied, une tête, ainsi qu'une partie aérodynamique de redressement de flux agencée entre le pied et la tête de l'aube, ladite partie aérodynamique de l'aube comportant un premier passage intérieur de refroidissement de lubrifiant dans lequel sont agencés des moyens de transfert thermique, le premier passage intérieur s'étendant selon une première direction principale d'écoulement du lubrifiant allant du pied vers la tête de l'aube, ledit premier passage intérieur étant en partie délimité par une paroi d'intrados et par une paroi d'extrados de l'aube, la partie aérodynamique comportant également un second passage intérieur de refroidissement de lubrifiant dans lequel sont agencés des moyens de transfert thermique, le second passage intérieur s'étendant selon une seconde direction principale d'écoulement du lubrifiant allant de la tête vers le pied de l'aube, ledit second passage intérieur étant en partie délimité par la paroi d'intrados et par la paroi d'extrados de l'aube.

Selon l'invention, la partie aérodynamique comprend une zone coudée reliant une extrémité du premier passage intérieur à une extrémité du second passage, la zone coudée s'étendant le long d'une génératrice courbe et étant en partie délimitée par la paroi d'intrados et par la paroi d'extrados de l'aube. De plus, la zone coudée comprend au moins un guide de lubrifiant agencé entre la paroi d'intrados et la paroi d'extrados de l'aube, et s'étendant chacun sensiblement parallèlement à la génératrice courbe de la zone coudée.

Grâce à la présence du/des guides de lubrifiant, la recirculation du lubrifiant est avantageusement évitée. De plus, le/les guides renforcent les transferts thermiques du fait de l'augmentation de la surface mouillée par le lubrifiant, de même qu'ils sont susceptibles d'améliorer la tenue mécanique de la zone coudée.

L'invention présente par ailleurs au moins l'une des caractéristiques optionnelles suivantes, prises isolément ou en combinaison.

De préférence, l'extrémité du premier passage est une extrémité de sortie de lubrifiant, et l'extrémité du second passage intérieur est une extrémité d'entrée de lubrifiant. Une solution inverse peut bien évidemment être envisagée, sans sortir du cadre de l'invention.

Chaque guide de lubrifiant est une paroi présentant une première extrémité en regard de l'extrémité, par exemple de sortie de lubrifiant, du premier passage intérieur, ainsi qu'une seconde extrémité en regard de l'extrémité, par exemple d'entrée de lubrifiant, du second passage intérieur.

De préférence, chaque guide de lubrifiant comporte, entre sa première et sa seconde extrémité, au moins une interruption de paroi formant un espace séparant deux tronçons de paroi. La conception en tronçons de paroi espacés les uns des autres permet d'augmenter le phénomène de convection, et constitue une solution simple pour favoriser l'évacuation des poudres en cas de fabrication additive des guides de lubrifiant.

De préférence, chaque guide de lubrifiant comporte, entre sa première et sa seconde extrémité, une pluralité d'interruptions de paroi formant chacun un espace séparant deux tronçons de paroi.

De préférence, pour deux guides de lubrifiant quelconques et directement consécutifs selon une direction d'envergure de l'aube, les tronçons de paroi sont agencés en quinconce. Cela permet d'augmenter encore davantage le phénomène de convection.

Par exemple, pour chaque guide de lubrifiant, le nombre de tronçons de paroi est compris entre 2 et 40. A cet égard, il est noté que le nombre de tronçons dépend en particulier de la résistance mécanique souhaitée, de la masse allouée pour les guides et/ou de leur mode de fabrication.

De préférence, les guides de lubrifiant définissent entre eux des canaux de passage de lubrifiant, et les guides sont espacés les uns des autres selon des distances d'écartement dont au moins deux d'entre elles sont différentes. Par conséquent, dans ce cas, la largeur des canaux de passage peut différer, ce qui permet de s'adapter localement à l'épaisseur de la zone coudée afin par exemple de présenter des canaux présentant tous des sections sensiblement équivalentes en matière de superficie. Il en résulte un meilleur équilibrage des débits de lubrifiant dans chacun des canaux de passage.

De préférence, chaque guide de lubrifiant est une paroi reliant la paroi d'intrados à la paroi d'extrados, et dans une section transversale quelconque de la zone coudée, ladite paroi formant le guide de lubrifiant est inclinée localement par rapport à une normale à chacune des parois d'intrados et d'extrados. Cela permet de mettre en œuvre une fabrication additive selon des procédés et principes conventionnels pour la zone coudée et la partie de l'aube qui l'entoure.

Néanmoins, il est noté que chaque guide de lubrifiant pourrait être une paroi reliant la paroi d'intrados à la paroi d'extrados, quelle que soit l'inclinaison de cette paroi. Cette particularité permet de renforcer la tenue mécanique de l'aube au niveau de la zone coudée soumise aux fortes pressions de lubrifiant.

De préférence, le nombre de guide de lubrifiant est compris entre 1 et 10. Ce nombre dépend en particulier des dimensions de la zone coudée et de l'épaisseur de matière formant les guides.

Enfin, l'invention a également pour objet une turbomachine d'aéronef, de préférence un turboréacteur, comprenant une pluralité d'aubes directrices agencées en aval ou en amont d'une soufflante de la turbomachine, lesdites aubes présentant de préférence une fonction structurale. De cette manière, les aubes sont capables d'assurer le passage des efforts du centre de la turbomachine vers une virole extérieure située dans le prolongement du carter de soufflante.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique de côté d'un turboréacteur selon l'invention ;
- la figure 2 représente une vue agrandie, plus détaillée, d'une partie d'aube directrice de sortie du turboréacteur montré sur la figure précédente ;
- la figure 3 est une vue en coupe prise le long de la ligne III-III de la figure 2 ;
- la figure 3a est une vue similaire à celle de la figure 3, selon une alternative de réalisation ;
- la figure 4 est une vue agrandie de celle de la figure 2, montrant plus spécifiquement la zone coudée ;
- la figure 5 est une vue en coupe prise le long de la ligne V-V de la figure 4 ;
- la figure 6 est une vue similaire à celle de la figure 5, selon une alternative de réalisation ;
- les figures 7 à 9 sont des vues similaires à celle de la figure 4, selon des alternatives de réalisation ; et
- la figure 10 est une figure similaire à celle de la figure 3, selon une alternative de réalisation.

### EXPOSÉ DÉTAILLÉ DE MODES DE RÉALISATION PRÉFÉRÉS

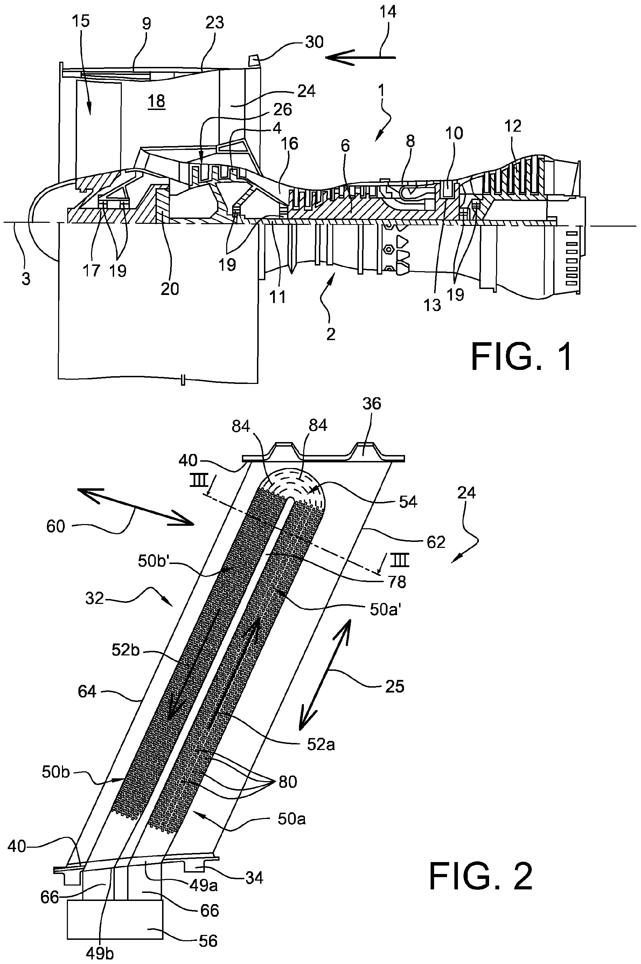

En référence à la figure 1, il est représenté un turboréacteur 1 à double flux et à double corps, présentant un taux de dilution élevé. Le turboréacteur 1 comporte de façon classique un générateur de gaz 2 de part et d'autre duquel sont agencés un compresseur basse pression 4 et une turbine basse pression 12, ce générateur de gaz 2 comprenant un compresseur haute pression 6, une chambre de combustion 8 et une turbine haute pression 10. Par la suite, les termes « avant » et « arrière » sont considérés selon une direction 14 opposée à la direction d'écoulement principale des gaz au sein du turboréacteur, cette direction 14 étant parallèle à l'axe longitudinal 3 de celle-ci. En revanche, les termes « amont » et « aval » sont considérés selon la direction d'écoulement principale des gaz au sein du turboréacteur.

Le compresseur basse pression 4 et la turbine basse pression 12 forment un corps basse pression, et sont reliés l'un à l'autre par un arbre basse pression 11 centré sur l'axe 3. De même, le compresseur haute pression 6 et la turbine haute pression 10 forment un corps haute pression, et sont reliés l'un à l'autre par un arbre haute pression 13 centré sur l'axe 3 et agencé autour de l'arbre basse pression 11. Les arbres sont supportés par des paliers de roulement 19, qui sont lubrifiés en étant agencés dans des enceintes d'huile. Il en est de même pour le moyeu de soufflante 17, également supporté par des paliers de roulement 19.

Le turboréacteur 1 comporte par ailleurs, à l'avant du générateur de gaz 2 et du compresseur basse pression 4, une soufflante 15 unique qui est ici agencée directement à l'arrière d'un cône d'entrée d'air du moteur. La soufflante 15 est rotative selon l'axe 3, et entourée d'un carter de soufflante 9. Sur la figure 1, elle n'est pas entraînée directement par l'arbre basse pression 11, mais seulement entraînée indirectement par cet arbre via un réducteur 20, ce qui lui permet de tourner avec une vitesse plus lente. Néanmoins, une solution à entraînement direct de la soufflante 15, par l'arbre basse pression 11, entre dans le cadre de l'invention.

En outre, le turboréacteur 1 définit une veine primaire 16 destinée à être traversée par un flux primaire, ainsi qu'une veine secondaire 18 destinée à être traversée par un flux secondaire situé radialement vers l'extérieur par rapport au flux primaire, le flux de la soufflante étant donc divisé. Comme cela est connu de l'homme du métier, la veine secondaire 18 est délimitée radialement vers l'extérieur en partie par une virole extérieure 23, préférentiellement métallique, prolongeant vers l'arrière le carter de soufflante 9.

Bien que cela n'ait pas été représenté, le turboréacteur 1 est équipé d'un ensemble d'équipements, par exemple du type pompe à carburant, pompe hydraulique, alternateur, démarreur, actionneur stator à calage variable (VSV), actionneur de vanne de décharge, ou encore générateur électrique de puissance. Il s'agit notamment d'un équipement pour la lubrification du réducteur 20. Ces équipements sont entraînés par une boîte d'accessoires ou AGB (non représentée), qui est également lubrifiée.

En aval de la soufflante 15, dans la veine secondaire 18, il est prévu une couronne d'aubes directrices qui sont ici des aubes directrices de sortie 24 (ou OGV, de l'anglais « Outlet Guide Vane »). Ces aubes statoriques 24 relient la virole extérieure 23 à un carter 26 entourant le compresseur basse pression 4. Elles sont espacées circonférentiellement les unes des autres, et permettent de redresser le flux secondaire après son passage à travers la soufflante 15. De plus, ces aubes 24 peuvent également remplir une fonction structurale, comme c'est le cas dans les exemples de réalisation qui sont présentement décrits. Elles assurent le transfert des efforts provenant du réducteur et des paliers de roulement 19 des arbres moteur et du moyeu de soufflante, vers la virole extérieure 23. Ensuite, ces efforts peuvent transiter par une attache moteur 30 fixée sur la virole 23 et reliant le turboréacteur à un mât d'accrochage (non représenté) de l'aéronef.

Enfin, les aubes directrices de sortie 24 assurent, dans les exemples de réalisation qui sont ici décrits, une troisième fonction d'échangeur thermique entre le flux d'air secondaire traversant la couronne d'aubes, et du lubrifiant circulant à l'intérieur de ces aubes 24. Le lubrifiant destiné à être refroidi par les aubes directrices de sorties 24 est celui servant à la lubrification des paliers de roulement 19, et/ou des équipements du turboréacteur, et/ou du boîtier d'accessoires, et/ou du réducteur 20. Ces aubes 24 font ainsi partie du/des circuits fluidiques dans lesquels le lubrifiant est mis en circulation pour successivement lubrifier le/les éléments associés, puis pour être refroidi.

En référence à présent aux figures 2 à 3a, il va être décrit l'une des aubes directrices de sortie 24, selon un premier mode de réalisation préféré de l'invention. A cet égard, il est noté que l'invention telle qu'elle va être décrite ci-dessous peut s'appliquer à toutes les aubes 24 de la couronne statorique centrée sur l'axe 3, ou bien seulement à certaines de ces aubes.

L'aube 24 peut être d'orientation strictement radiale comme sur la figure 1, ou bien être légèrement inclinée axialement comme cela est montré sur la figure 2. Dans tous les cas, elle est préférentiellement droite en vue de côté telle que montrée sur la figure 2, en s'étendant selon une direction d'envergure 25, ou direction radiale de l'aube.

L'aube directrice de sortie 24 comporte une partie aérodynamique 32 qui correspond à sa partie centrale, c'est-à-dire celle exposée au flux secondaire. De part et d'autre de cette partie aérodynamique 32 servant à redresser le flux sortant de la soufflante, l'aube 24 comporte respectivement un pied 34 et une tête 36.

Le pied 34 sert à la fixation de l'aube 24 sur le carter du compresseur basse pression, tandis que la tête sert à la fixation de cette même aube sur la virole extérieure prolongeant le carter de soufflante. De plus, l'aube 24 comprend au niveau de son pied et de sa tête, des plateformes 40 servant à reconstituer la veine secondaire entre les aubes 24, dans la direction circonférentielle.

La partie aérodynamique 32 de l'aube, sans ses matrices de conduction thermique qui seront décrites ci-après, est par exemple réalisée d'un seul tenant, obtenue par exemple par fabrication additive dite impression 3D ou fabrication directe. La fabrication additive de la partie aérodynamique 32 est par exemple réalisée par l'une quelconque des techniques suivantes :
- fusion sélective par laser (de l'anglais « Selective Laser Melting » ou « SLM ») ou par faisceau d'électrons (de l'anglais « Electron Beam Melting » ou « EBM ») ;
- frittage sélectif par laser (de l'anglais « Selective Laser Sintering » ou « SLS ») ou par faisceau d'électrons ;
- tout autre type de technique de solidification de poudre sous l'action d'une source d'énergie de moyenne à forte puissance, le principe étant de faire fondre ou fritter un lit de poudre métallique par faisceau laser ou faisceau d'électrons.

La poudre utilisée est à base d'aluminium ou de titane, ou à base d'un autre matériau métallique ou tout autre matériau présentant des caractéristiques de conduction thermique satisfaisantes.

La partie aérodynamique 32 de l'aube pourrait néanmoins être réalisée à l'aide de techniques plus conventionnelles, permettant de faire apparaître une portion creusée dans laquelle la matrice serait ensuite introduite, avant la mise en place d'une plaque de fermeture par exemple par soudage, collage ou brasage.

De plus, la fabrication de la pièce unique peut comprendre le pied 34, et/ou la tête 36, et/ou les plateformes 40, sans sortir du cadre de l'invention.

La partie aérodynamique 32 est équipée de deux passages intérieurs 50a, 50b sensiblement parallèles l'un à l'autre, et parallèles à la direction d'envergure 25. Plus précisément, il s'agit d'un premier passage intérieur 50a de refroidissement de lubrifiant, qui s'étend selon une première direction principale 52a d'écoulement du lubrifiant. Cette direction 52a est sensiblement parallèle à la direction d'envergure 25, et présente un sens allant du pied 34 vers la tête 36. De manière analogue, il est prévu un second passage intérieur 50b de refroidissement de lubrifiant, qui s'étend selon une seconde direction principale 52b d'écoulement du lubrifiant au sein de ce passage. Cette direction 52b est aussi sensiblement parallèle à la direction d'envergure 25, et présente un sens inverse allant de la tête 36 au pied 34. Dans le mode de réalisation considéré, le premier passage 50a est donc prévu pour être traversé radialement vers l'extérieur par le lubrifiant, tandis que le second passage 50b est prévu pour être traversé radialement vers l'intérieur. Pour assurer le passage de l'un à l'autre, à proximité de la tête 36, les extrémités radiales externes des deux passages 50a, 50b sont reliées fluidiquement par une zone coudée 54 également dénommée coude, qui s'étend sur sensiblement 180°. Cette zone coudée 54, qui est spécifique à la présente invention et qui sera détaillée ci-après, correspond à un creux pratiqué dans la partie aérodynamique 32, et équipé de moyens spécifique de guidage du lubrifiant.

Les extrémités radiales internes des deux passages 50a, 50b sont quant à elles reliées au circuit de lubrifiant, schématisé par l'élément 56 sur la figure 2. Ce circuit 56 comprend notamment une pompe (non représentée), permettant d'appliquer au lubrifiant le sens de circulation désiré au sein des passages 50a, 50b, à savoir l'introduction du lubrifiant par l'extrémité radiale interne du premier passage 50a, et l'extraction du lubrifiant par l'extrémité radiale interne du second passage 50b. Des raccords 66 assurent la communication fluidique entre les extrémités radiales internes des passages 50a, 50b et le circuit 56, ces raccords 66 traversant le pied 34.

Les deux passages 50a, 50b ainsi que la zone coudée 54 présentent ensemble une forme générale de U, avec le premier passage 50a et le second passage 50b décalés l'un de l'autre selon une direction transversale 60 de l'aube sensiblement orthogonale à la direction d'envergure 25. Pour optimiser au mieux les échanges thermiques, le premier passage 50a se situe du côté d'un bord de fuite 62 de l'aube 24, tandis que le second passage 50b se situe du côté d'un bord d'attaque 64. Cependant, une situation inverse peut être retenue, sans sortir du cadre de l'invention.

La partie aérodynamique 32 de l'aube directrice de sortie 24 comporte une paroi d'intrados 70, une paroi d'extrados 72, une zone pleine 74 raccordant les deux parois 70, 72 à proximité du bord de fuite 62, une zone pleine 76 raccordant les deux parois 70, 72 à proximité du bord d'attaque 64, ainsi qu'une zone pleine centrale 78. Cette dernière zone 78 raccorde les deux parois 70, 72 au niveau d'une portion sensiblement centrale de celles-ci, selon la direction de la corde de l'aube. Elle sert également de renfort structural et s'étend du pied 34 jusqu'au coude 54, tandis que les zones pleines 74, 76 s'étendent sur sensiblement toute la longueur de la partie 32, selon la direction d'envergure 25. Le premier passage 50a est formé entre les parois 70, 72 et entre les zones pleines 74, 78, tandis que le second passage 50b est formé entre les parois 70, 72 et entre les zones pleines 76, 78. Les parois d'intrados et d'extrados 70, 72 présentent, au regard des passages 50a, 50b qu'elles délimitent, des épaisseurs sensiblement constantes. En revanche, les passages 50a, 50b s'étendent transversalement selon la direction 60 en présentant une hauteur variable entre les deux parois 70, 72. Alternativement, ces passages pourraient avoir une hauteur constante, et les deux parois 70, 72 adopteraient alors préférentiellement une épaisseur variable pour obtenir le profil aérodynamique de l'aube.

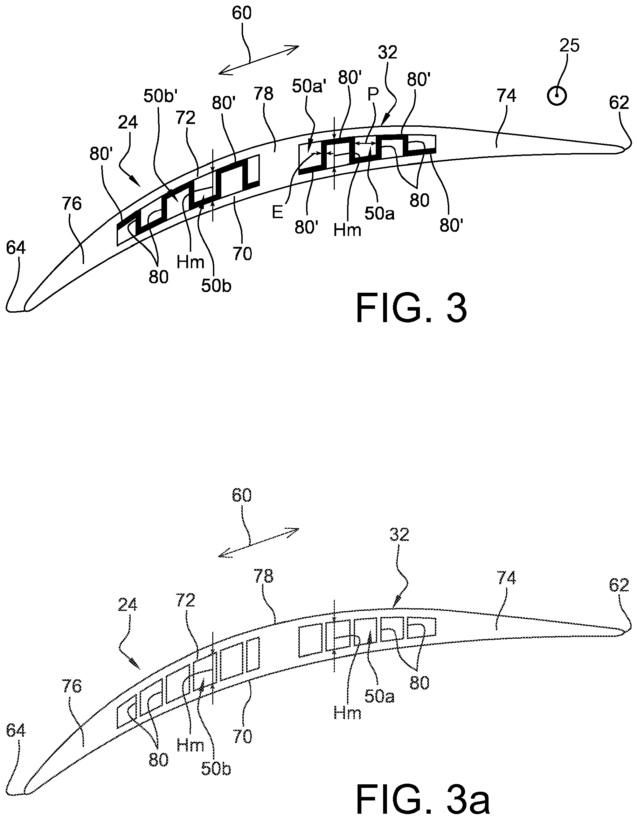

Les deux passages intérieurs 50a, 50b de refroidissement de lubrifiant présentent la particularité d'intégrer des moyens de conduction thermique comprenant de préférence des parois et/ou des ailettes 80. Sur la figure 3, ces moyens prennent la forme de matrices de conduction thermique, pourvues en particulier d'ailettes principales de transfert thermique et également dites matrices de convection. Ces matrices 50a', 50b' sont insérées dans les passages intérieurs 50a, 50b. A titre d'exemple, chaque matrices 50a', 50b' comprend des rangées d'ailettes principales de transfert thermique 80 se succédant selon direction d'envergure 25. Les ailettes principales 80 sont localement agencées sensiblement orthogonalement aux parois intrados et extrados 70, 72. De plus, elles s'étendent chacune parallèlement à la première direction 52a, ces ailettes étant espacées les unes des autres selon cette même première direction 52a, ainsi que selon la direction transversale 60. Elles présentent une hauteur moyenne Hm, entre les deux parois 70, 72, de l'ordre de 4 à 8 mm. Leur épaisseur E, selon la direction transversale 60, présente une valeur préférentiellement constante comprise de préférence entre 0,5 et 20 mm, tandis que leur longueur selon la direction 52a présente une valeur préférentiellement constante comprise entre 1 et 40 mm. Par ailleurs, les écartements / pas « P » entre les ailettes 80 selon chacune des deux directions 52a, 60, sont par exemple de l'ordre de 2 à 4 mm.

Les ailettes 80 peuvent être agencées en quinconce, avec une densité par exemple d'environ 3 ailettes/cm². Plus généralement, la densité est comprise par exemple entre environ 0,2 et 5 ailettes/cm² en moyenne.

En outre, chaque rangée comprend des ailettes de jonction 80' reliant chacune deux ailettes principales 80 directement consécutives selon la direction transversale 60. Les ailettes de jonction 80' sont agencées sensiblement orthogonalement aux ailettes principales 80, en étant situées à plat sur la paroi d'intrados 70 ou sur la paroi d'extrados 72. Plus précisément, les ailettes d'une même rangée sont alternativement en contact intérieur avec la paroi d'intrados 70, et en contact intérieur avec la paroi d'extrados 72. Chaque rangée forme ainsi, avec l'ensemble de ses ailettes principales 80 et de ses ailettes de jonction 80', une structure transversale de forme générale en créneaux.

Une fois réalisée, chaque matrice 50a', 50b' est insérée dans son passage associé 50a, 50b, depuis le pied 34 de l'aube fabriquée d'une seule pièce. L'insertion est effectuée via un orifice d'introduction 49a, 49b pratiqué à travers ce même pied d'aube 34, et présentant une section sensiblement identique à celle des passages 50a, 50b. Ces orifices d'introduction 49a, 49b, visibles sur la figure 2, débouchent ensuite dans les raccords 66 menant au circuit 56. Une solution avec des bouchons pourrait également être employée pour obturer partiellement les orifices d'introduction 49a, 49b, après l'insertion des matrices dans les passages. Dans ce cas de figure, les raccords 66 de section plus faible viendraient se raccorder sur les bouchons, au niveau d'un canal de circulation de lubrifiant pratiqué à travers chacun de ces bouchons.

Chaque matrice de conduction thermique 50a', 50b' s'étend sur toute ou partie de la longueur radiale de son passage 50a, 50b associé. De préférence, plus de 80% de la longueur radiale de chaque passage 50a, 50b est occupée par sa matrice correspondante 50a', 50b'.

Alternativement, comme visible sur la figure 3a, les ailettes 80 peuvent être réalisées d'une seule pièce par fabrication additive avec les parois intrados et extrados 70, 72 qu'elles relient.

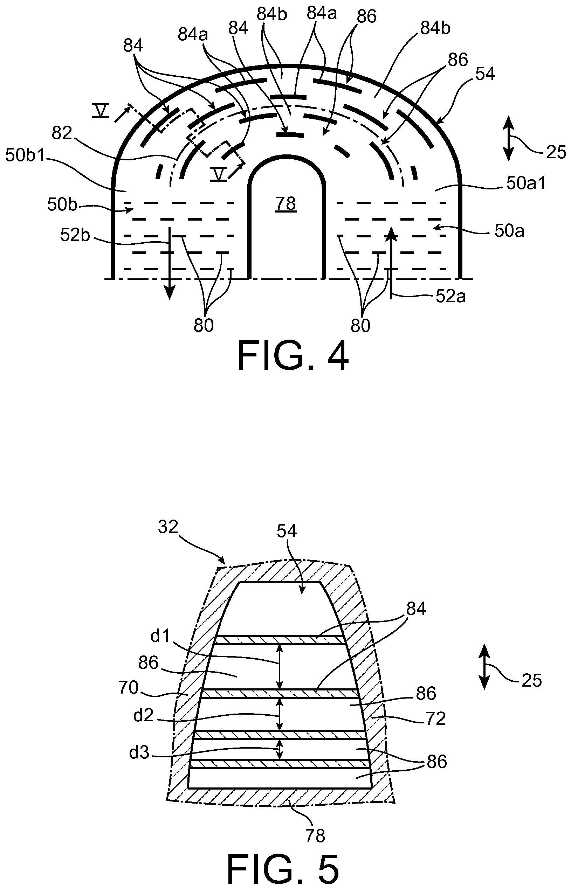

En référence à présent aux figures 4 et 5, il est représenté la zone coudée 54 de façon plus détaillée. Cette zone 54, en forme générale de U et assurant donc un virage à sensiblement 180° pour le lubrifiant, s'étend entre une extrémité 50a1 du premier passage 50a, et une extrémité 50b1 du second passage intérieur 50b. Elle est également délimitée par les parois d'intrados 70 et d'extrados 72, ainsi que par la zone pleine centrale 78. Sa section transversale peut se réduire en allant vers la tête de l'aube, mais il n'y a de préférence pas de rupture de section entre les extrémités des branches du U de la zone coudée 54, et les extrémités 50a1, 50b1 des passages intérieurs. Dans la réalisation considérée, l'extrémité 50a1 du premier passage 50a est une extrémité de sortie de lubrifiant, et l'extrémité 50b1 du second passage intérieur 50b est une extrémité d'entrée de lubrifiant.

La zone coudée 54 s'étend selon une génératrice courbe 82 en forme de demi-cercle, ou de forme ovale, ou encore de toute autre forme similaire. La génératrice 82 peut ici être assimilée à une ligne médiane de la zone coudée, suivant la courbure de celle-ci. L'une des particularités de l'invention réside dans le fait que cette zone coudée 54 est équipée intérieurement d'un ou plusieurs guides de lubrifiant 84 qui s'étendent chacun sensiblement parallèlement à la génératrice courbe 82, c'est-à-dire présentant une courbure analogue à la courbure générale de la zone coudée 54.

Chaque guide de lubrifiant 84 présente la forme d'une paroi présentant une première extrémité en regard de l'extrémité de sortie 50a1 de lubrifiant du premier passage 50a, ainsi qu'une seconde extrémité en regard de l'extrémité d'entrée 50b1 de lubrifiant du second passage 50b. Chaque paroi 84 s'étend par exemple sur une longueur correspondant de 75 à 100% de la longueur totale de la zone coudée 54, selon la direction de la génératrice courbe 82.

En étant parallèles, ces guides 84 définissent entre eux des canaux de passage de lubrifiant 86 qui s'étendent donc également parallèlement à la génératrice courbe 82. Deux canaux 86 sont également définis entre le corps de la partie aérodynamique 32 et les deux guides 84 situés aux extrémités de la zone coudée, selon la direction 25. Les distances d'écartement d1, d2, d3 entre les guides 84 peut varier, notamment de manière à s'adapter localement à l'épaisseur de la zone coudée et faire en sorte que les canaux 86 présentent tous des sections sensiblement équivalentes en matière de superficie. Cela conduit à un meilleur équilibrage des débits de lubrifiant dans chacun des canaux de passage 86, entre les deux passages intérieurs 50a, 50b de l'aube. A titre d'exemple indicatif tel que celui représenté sur la figure 5, si l'épaisseur de la zone 54 entre les parois d'intrados et d'extrados 70, 72 augmente en allant radialement vers l'intérieur, alors les distances d'écartement référencées d1, d2 et d3 évoluent de manière décroissante. Quoi qu'il en soit, la densité et l'écartement des guides peuvent être adaptés en fonction des besoins rencontrés, de façon à guider au mieux le lubrifiant entre les deux passages 50a, 50b. A cet égard, il est noté que le nombre de guides de lubrifiant 84 est par exemple de l'ordre de 4 ou 5, formant ainsi un nombre de canaux 86 de 5 ou 6. L'épaisseur de chaque guide 84 est quant à elle de l'ordre de 1 à 5 mm. Suivant le nombre de canaux souhaités, en particulier en dépendance des contraintes mécaniques et/ou du mode de fabrication mis en œuvre, l'épaisseur des guides peut être de 15 à 20 mm.

Afin de renforcer la tenue mécanique de la zone coudée et d'augmenter les échanges thermiques entre le lubrifiant et l'air, chaque guide 84 en forme de paroi relie la paroi d'intrados 70 à la paroi d'extrados 72. Encore plus préférentiellement, les guides 84 sont réalisés d'une seule pièce avec les autres éléments de la partie aérodynamique 32, de préférence par fabrication additive.

En outre, pour améliorer les échanges thermiques par convection, chaque guide 84 peut se présenter sous la forme de plusieurs tronçons de paroi 84a espacés les uns des autres par des interruptions 84b, formant des espaces libres entre ces tronçons 84a. Ces interruptions 84b favorisent le mouillage des tronçons de paroi 84a, sans pour autant générer des perturbations néfastes sur l'écoulement du lubrifiant.

La section de ces guides ou tronçons de guide peut être de type longiligne régulière comme représenté sur les figures, mais peuvent alternativement avoir des profils oblongs, en losange globalement orienté suivant le sens du flux, en profil de type NACA à évasement s'élargissant dans le sens du flux, etc.

Pour chaque guide 84, le nombre de tronçons 84a peut être compris entre 2 et 40. De préférence, la longueur des tronçons de paroi 84a est supérieure à celle des interruptions 84b, même si une solution inverse pourrait être adoptée, sans sortir du cadre de l'invention.

Pour améliorer encore davantage les échanges par convection, il est préférentiellement prévu que les tronçons de paroi 84a des différents guides 84 qui se succèdent selon la direction 25, soient agencés en quinconce comme cela est visible sur la figure 4.

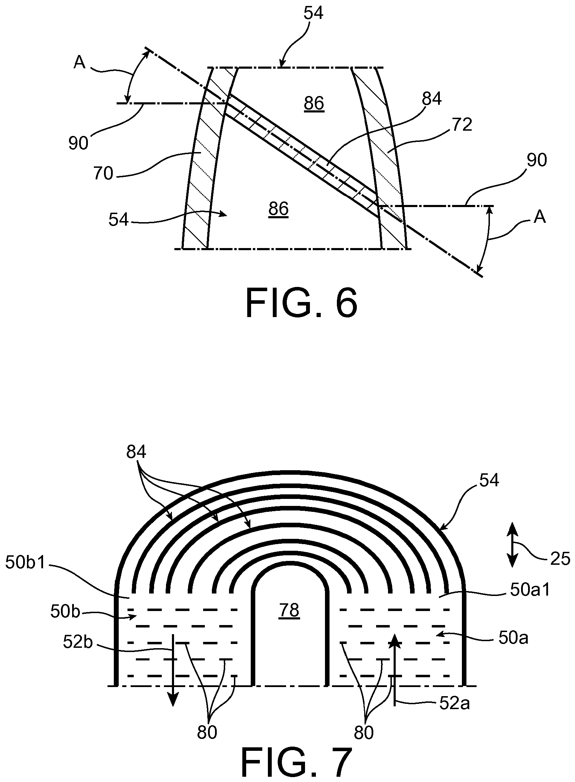

La figure 5 représente des guides de lubrifiant 84 orientés sensiblement droits relativement aux parois d'intrados 70 et d'extrados 72, mais pour faciliter la fabrication additive de l'ensemble, ces guides peuvent être inclinés. Cette alternative est représentée sur la figure 6, montrant en section transversale l'un des guides 84 de la zone coudée, avec la paroi inclinée localement d'un angle A par rapport à une normale 90 à chacune des parois d'intrados 70 et d'extrados 72. Cet angle A est par exemple compris entre 20 et 60°, et en particulier entre 30 et 55°.

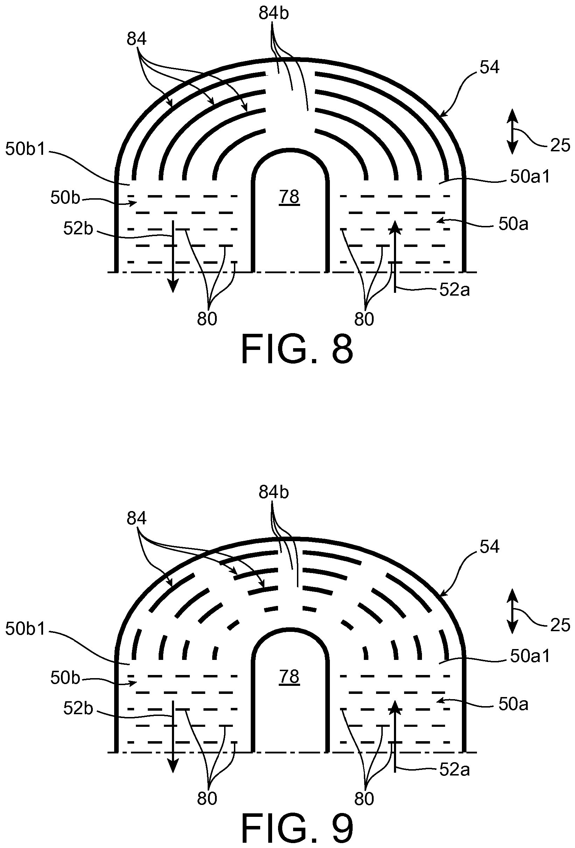

Les figures suivantes montrent des alternatives de réalisation envisageables, dans lesquelles les guides 84 sont de formes différentes. Sur la figure 7, les guides sont continus, c'est-à-dire qu'ils ne présentent pas d'interruptions. Sur la figure 8, une seule interruption 84b est prévue par guide 84, de préférence au niveau du fond du U pour faciliter l'évacuation des poudres en cas de fabrication additive. Enfin, sur la figure 9, les guides 84 sont pourvus de plusieurs interruptions et de plusieurs tronçons de paroi, avec les tronçons 84a qui ne sont plus agencés en quinconce mais répartis en rangées.

De retour à la figure 2, durant le fonctionnement de la turbomachine, le lubrifiant est introduit dans le premier passage intérieur 50a, dans la première direction 52a allant radialement vers l'extérieur. A ce stade, le lubrifiant présente une température élevée. Un échange thermique s'effectue alors entre ce épousant la première matrice de conduction thermique, et le flux secondaire épousant la surface extérieure des parois d'intrados et d'extrados 70, 72 portant ces ailettes. Le lubrifiant, après avoir transité par la zone coudée 54 dans laquelle il est refroidi grâce notamment aux guides de lubrifiant 84, pénètre dans le second passage 50b. Dans ce dernier, il subit un refroidissement analogue, toujours par échange thermique avec le flux d'air secondaire et en circulant selon la seconde direction principale d'écoulement 52b, à travers la seconde matrice de conduction thermique. Ensuite, le lubrifiant refroidi est extrait de l'aube 24, et redirigé par le circuit fermé 56 vers les éléments à lubrifier.

Bien entendu, diverses modifications peuvent être apportées par l'homme du métier à l'invention qui vient d'être décrite, uniquement à titre d'exemples non limitatifs. En particulier, il est noté que dans le cas non illustré des aubes directrices d'entrée pour redresser le flux d'air en amont de la soufflante, ces aubes sont agencées dans tout le flux d'air de la soufflante autour d'un cône d'entrée d'air non rotatif, les pieds des aubes étant alors reliés à ce cône fixe d'entrée d'air.

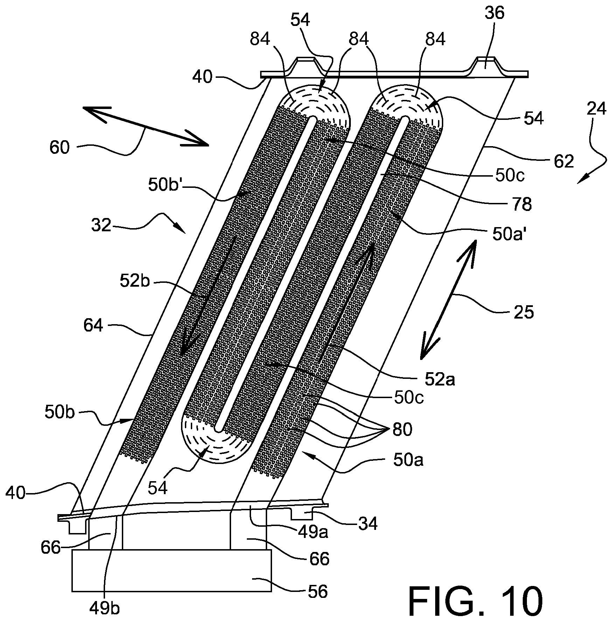

Egalement, l'invention n'est pas limitée aux cas où l'aube n'intègre que deux passages 50a, 50b, un nombre supérieur de passages pouvant en effet être adopté, par exemple trois, ou quatre passages 50a, 50b, 50c comme sur l'alternative de réalisation montrée sur la figure 10. Dans cette hypothèse, des zones coudées 54 conformes à l'invention sont préférentiellement agencées entre les passages 50a, 50b, 50c directement consécutifs dans le sens du flux de lubrifiant.

## Revendications

1. Aube directrice (24) destinée à être agencée dans tout ou partie d'un flux d'air d'une soufflante (15) de turbomachine d'aéronef à double flux, l'aube directrice comprenant un pied (34), une tête (36), ainsi qu'une partie aérodynamique (32) de redressement de flux agencée entre le pied et la tête de l'aube, ladite partie aérodynamique de l'aube comportant un premier passage intérieur (50a) de refroidissement de lubrifiant dans lequel sont agencés des moyens de transfert thermique (80), le premier passage intérieur (50a) s'étendant selon une première direction principale (52a) d'écoulement du lubrifiant allant du pied (34) vers la tête (36) de l'aube, ledit premier passage intérieur (50a) étant en partie délimité par une paroi d'intrados (70) et par une paroi d'extrados (72) de l'aube, la partie aérodynamique (32) comportant également un second passage intérieur (50b) de refroidissement de lubrifiant dans lequel sont agencés des moyens de transfert thermique (80), le second passage intérieur (50b) s'étendant selon une seconde direction principale (52b) d'écoulement du lubrifiant allant de la tête (36) vers le pied (34) de l'aube, ledit second passage intérieur (50b) étant en partie délimité par la paroi d'intrados (70) et par la paroi d'extrados (72) de l'aube, et
**caractérisée en ce que** la partie aérodynamique (32) comprend une zone coudée (54) reliant une extrémité (50a1) du premier passage intérieur (50a) à une extrémité (50b1) du second passage (50b), la zone coudée s'étendant le long d'une génératrice courbe (82) et étant en partie délimitée par la paroi d'intrados (70) et par la paroi d'extrados (72) de l'aube, et **en ce que** la zone coudée (54) comprend au moins un guide de lubrifiant (84) agencé entre la paroi d'intrados (70) et la paroi d'extrados (72) de l'aube, et s'étendant chacun sensiblement parallèlement à la génératrice courbe (82) de la zone coudée (54).

2. Aube directrice selon la revendication 1, **caractérisée en ce que** chaque guide de lubrifiant (84) est une paroi présentant une première extrémité en regard de l'extrémité (50a1) du premier passage intérieur (50a), ainsi qu'une seconde extrémité en regard de l'extrémité (50b1) du second passage intérieur (50b).

3. Aube directrice selon la revendication 2, **caractérisée en ce que** chaque guide de lubrifiant (84) comporte, entre sa première et sa seconde extrémité, au moins une interruption de paroi (84b) formant un espace séparant deux tronçons de paroi (84a).

4. Aube directrice selon la revendication 3, **caractérisée en ce que** chaque guide de lubrifiant (84) comporte, entre sa première et sa seconde extrémité, une pluralité d'interruptions de paroi (84b) formant chacun un espace séparant deux tronçons de paroi (94a).

5. Aube directrice selon la revendication 4, **caractérisée en ce que** pour deux guides de lubrifiant (84) quelconques et directement consécutifs selon une direction d'envergure (25) de l'aube, les tronçons de paroi (84a) sont agencés en quinconce.

6. Aube directrice selon l'une quelconque des revendications 3 à 5, **caractérisée en ce que** pour chaque guide de lubrifiant (84), le nombre de tronçons de paroi (84a) est compris entre 2 et 40.

7. Aube directrice selon l'une quelconque des revendications précédentes, **caractérisée en ce que** les guides de lubrifiant (84) définissent entre eux des canaux de passage de lubrifiant (86), et **en ce que** les guides sont espacés les uns des autres selon des distances d'écartement (d1, d2, d3) dont au moins deux d'entre elles sont différentes.

8. Aube directrice selon l'une quelconque des revendications précédentes, **caractérisée en ce que** chaque guide de lubrifiant (84) est une paroi reliant la paroi d'intrados (70) à la paroi d'extrados (72), et **en ce que** dans une section transversale quelconque de la zone coudée (54), ladite paroi formant le guide de lubrifiant est inclinée localement par rapport à une normale (90) à chacune des parois d'intrados (70) et d'extrados (72).

9. Aube directrice selon l'une quelconque des revendications précédentes, **caractérisée en ce que** le nombre de guide de lubrifiant (84) est compris entre 1 et 10.

10. Turbomachine (1) d'aéronef, de préférence un turboréacteur, comprenant une pluralité d'aubes directrices (24) selon l'une quelconque des revendications précédentes, agencées en aval ou en amont d'une soufflante (15) de la turbomachine, lesdites aubes (24) présentant de préférence une fonction structurale.

## Patentansprüche

1. Leitschaufel (24), die dazu vorgesehen ist, in dem gesamten oder einem Teil eines Luftstroms eines Gebläses (15) einer Zweikreis-Flugzeugturbomaschine angeordnet zu werden, wobei die Leitschaufel einen Fuß (34), einen Kopf (36) sowie einen aerodynamischen Teil (32) zur Ausrichtung des Stromes aufweist, der zwischen dem Fuß und dem Kopf der Schaufel angeordnet ist, wobei der aerodynamische Teil der Schaufel einen ersten Innenkanal (50a) zur Kühlung von Schmiermittel aufweist, in dem Wärmeübertragungsmittel (80) angeordnet sind, wobei der erste Innenkanal (50a) entlang einer ersten Hauptströmungsrichtung (52a) des Schmiermittels von dem Fuß (34) in Richtung des Kopfes (36) der Schaufel verläuft, wobei der erste Innenkanal (50a) teilweise durch eine nach innen gewölbte Wand (70) und eine nach außen gewölbte Wand (72) der Schaufel begrenzt ist, wobei der aerodynamische Teil (32) auch einen zweiten Innenkanal (50b) zur Kühlung von Schmiermittel aufweist, in dem Wärmeübertragungsmittel (80) angeordnet sind, wobei der zweite Innenkanal (50b) entlang einer zweiten Hauptströmungsrichtung (52b) des Schmiermittels von dem Kopf (36) in Richtung des Fußes (34) der Schaufel verläuft, wobei der zweite Innenkanal (50b) teilweise durch die nach innen gewölbte Wand (70) und durch die nach außen gewölbte Wand (72) der Schaufel begrenzt ist, und
**dadurch gekennzeichnet, dass** der aerodynamische Teil (32) einen gebogenen Bereich (54) aufweist, der ein Ende (50a1) des ersten Innenkanals (50a) mit einem Ende (50b1) des zweiten Kanals (50b) verbindet, wobei sich der gebogene Bereich entlang eines gekrümmten Generators (82) erstreckt und teilweise durch die nach innen gewölbte Wand (70) und durch die nach außen gewölbte Wand (72) der Schaufel begrenzt ist, und dass der gebogene Bereich (54) mindestens eine Schmiermittelführung (84) aufweist, die zwischen der nach innen gewölbten Wand (70) und der nach außen gewölbten Wand (72) der Schaufel angeordnet ist und sich jeweils im Wesentlichen parallel zu dem gekrümmten Generator (82) des gebogenen Bereiches (54) erstreckt.

2. Leitschaufel nach Anspruch 1, **dadurch gekennzeichnet, dass** jede Schmiermittelführung (84) aus einer Wand besteht, welche ein erstes Ende gegenüber dem Ende (50a1) des ersten Innenkanals (50a) sowie ein zweites Ende gegenüber dem Ende (50b1) des zweiten Innenkanals (50b) darstellt.

3. Leitschaufel nach Anspruch 2, **dadurch gekennzeichnet, dass** jede Schmiermittelführung (84) zwischen ihrem ersten und ihrem zweiten Ende mindestens eine Unterbrechung der Wand (84b) aufweist, die einen Raum bildet, welcher zwei Wandabschnitte (84a) voneinander trennt.

4. Leitschaufel nach Anspruch 3, **dadurch gekennzeichnet, dass** jede Schmiermittelführung (84) zwischen ihrem ersten und ihrem zweiten Ende mehrere Unterbrechungen der Wand (84b) aufweist, die jeweils einen Raum bilden, welcher zwei Wandabschnitte (94a) voneinander trennt.

5. Leitschaufel nach Anspruch 4, **dadurch gekennzeichnet, dass** für zwei beliebige Schmiermittelführungen (84), die in einer Breitenrichtung (25) der Schaufel unmittelbar aufeinanderfolgen, die Wandabschnitte (84a) versetzt angeordnet sind.

6. Leitschaufel nach einem der Ansprüche 3 bis 5, **dadurch gekennzeichnet, dass** für jede Schmiermittelführung (84) die Anzahl von Wandabschnitten (84a) zwischen 2 und 40 liegt.

7. Leitschaufel nach einem der vorhergehenden Ansprüche, **dadurch gekennzeichnet, dass** die Schmiermittelführungen (84) zwischen sich Schmiermitteldurchgangskanäle (86) definieren, und dass die Führungen entlang der Abstände (d1, d2, d3), von denen mindestens zwei untereinander verschieden sind, voneinander beabstandet sind.

8. Leitschaufel nach einem der vorhergehenden Ansprüche, **dadurch gekennzeichnet, dass** jede Schmiermittelführung (84) eine Wand ist, die die nach innen gewölbte Wand (70) mit der nach außen gewölbten Wand (72) verbindet, und dass in einem beliebigen Querabschnitt des gebogenen Bereichs (54) die die Schmiermittelführung bildende Wand lokal begrenzt bezüglich einer Normalen (90) zu jeder der nach innen gewölbten Wand (70) und der nach außen gewölbten Wand (72) geneigt ist.

9. Leitschaufel nach einem der vorhergehenden Ansprüche, **dadurch gekennzeichnet, dass** die Anzahl der Schmiermittelführungen (84) zwischen 1 und 10 liegt.

10. Turbomaschine (10) eines Flugzeugs, bevorzugt ein Turboluftstrahltriebwerk, mit mehreren Leitschaufeln (24) nach einem der vorhergehenden Ansprüche, welche einem Gebläse (15) der Turbomaschine nachgelagert oder vorgelagert sind, wobei die Schaufeln (24) bevorzugt eine strukturelle Funktion übernehmen.

## Claims

1. A guide vane (24) intended to be arranged in all or part of an air flow of a bypass aircraft turbomachine fan (15), the guide vane comprising a root (34), a tip (36) as well as an aerodynamic flow straightening part (32) arranged between the root and the tip of the vane, said aerodynamic part of the vane including a first lubricant cooling interior passage (50a) in which heat transfer means (80) are arranged, the first interior passage (50a) extending along a first main flowing direction (52a) of the lubricant from the root (34) to the tip (36) of the vane, said first interior passage (50a) being partly delimited by an intrados wall (70) and an extrados wall (72) of the vane, the aerodynamic part (32) also including a second lubricant cooling interior passage (50b) in which heat transfer means are arranged (80), the second interior passage (50b) extending along a second main flowing direction (52b) of the lubricant from the tip (36) to the root (34) of the vane, said second interior passage (50b) being partly delimited by the intrados wall (70) and the extrados wall (72) of the vane, and
**characterized in that** the aerodynamic part (32) comprises a bent area (54) connecting one end (50a1) of the first interior passage (50a) to one end (50b1) of the second passage (50b), the bent area extending along a curved generatrix (82) and being partly delimited by the intrados wall (70) and the extrados wall (72) of the vane, and **in that** the bent area (54) comprises at least one lubricant guide (84) arranged between the intrados wall (70) and the extrados wall (72) of the vane, and each extending substantially parallel to the curved generatrix (82) of the bent area (54).

2. The guide vane according to claim 1, **characterized in that** each lubricant guide (84) is a wall having a first end facing the end (50a1) of the first interior passage (50a), and a second end facing the end (50b1) of the second interior passage (50b).

3. The guide vane according to claim 2, **characterized in that** each lubricant guide (84) includes, between its first and its second end, at least one wall interruption (84b) forming a space separating two wall segments (84a).

4. The guide vane according to claim 3, **characterized in that** each lubricant guide (84) includes, between its first and its second end, a plurality of wall interruptions (84b) each forming a space separating two wall segments (94a).

5. The guide vane according to claim 4, **characterized in that**, for any two lubricant guides (84) directly consecutive along a spanwise direction (25) of the vane, the wall segments (84a) are arranged in a staggered manner.

6. The guide vane according to any one of claims 3 to 5, **characterized in that**, for each lubricant guide (84), the number of wall segments (84a) is comprised between 2 and 40.

7. The guide vane according to any one of the preceding claims, **characterized in that** the lubricant guides (84) define therebetween lubricant passage channels (86), and **in that** the guides are spaced from each other along spacing distances (d1, d2, d3) at least two of which being different.

8. The guide vane according to any one of the preceding claims, **characterized in that** each lubricant guide (84) is a wall connecting the intrados wall (70) to the extrados wall (72), and **in that** in any cross-section of the bent area (54), said wall forming the lubricant guide is inclined locally with respect to a normal (90) to each of the intrados (70) and extrados (72) walls.

9. The guide vane according to any one of the preceding claims, **characterized in that** the number of lubricant guides (84) is comprised between 1 and 10.

10. An aircraft turbomachine (1), preferably a turbojet engine, comprising a plurality of guide vanes (24) according to any one of the preceding claims, arranged downstream or upstream of a fan (15) of the turbomachine, said vanes (24) having preferably a structural function.
